Europäisches Patentamt

European Patent Office

Office européen des brevets

(11) Veröffentlichungsnummer : **0 102 595**
**B1**

(12) **EUROPÄISCHE PATENTSCHRIFT**

(45) Veröffentlichungstag der Patentschrift :
06.05.87

(51) Int. Cl.⁴ : **G 01 D 9/34**, G 01 D 15/24,
G 07 C 5/12

(21) Anmeldenummer : 83108404.1

(22) Anmeldetag : 26.08.83

(54) Verfahren zum Steuern eines Aufzeichnungsorgans.

(30) Priorität : 04.09.82 DE 3232980

(43) Veröffentlichungstag der Anmeldung :
14.03.84 Patentblatt 84/11

(45) Bekanntmachung des Hinweises auf die Patenterteilung : 06.05.87 Patentblatt 87/19

(84) Benannte Vertragsstaaten :
DE FR GB IT

(56) Entgegenhaltungen :
DE-A- 2 231 545
DE-B- 1 276 351
DE-B- 2 335 340

(73) Patentinhaber : **Mannesmann Kienzle GmbH**
**Heinrich-Hertz-Strasse**
**D-7730 Villingen-Schwenningen (DE)**

(72) Erfinder : **Siefert, Roland**
**Im Herrengarten 6**
**D-7737 Bad-Dürrheim (DE)**

## Beschreibung

Die Erfindung betrifft ein Verfahren zum Steuern eines Aufzeichnungsorgans nach dem Oberbegriff des Anspruchs 1 und eine Aufzeichnungsanordnung nach dem Oberbegriff des Anspruchs 2 (siehe DE-A-2 231 545).

Ein solches Verfahren, bei dem das Aufzeichnungsorgan sozusagen in zwei Dimensionen gesteuert werden muß, ist bekanntlich dann erforderlich, wenn, was bei relativ kleinen Aufzeichnungsträgern, beispielsweise Diagrammscheiben, unumgänglich ist, eine weitgehende Nutzung der Aufzeichnungsfläche angestrebt wird und somit aus Raummangel nicht jeder Aufzeichnungsspur ein Aufzeichnungsorgan zugeordnet werden kann und außerdem ein Aufzeichnungsverfahren gewählt wird, bei welchem, wie z. B. bei einem Wachspapier- oder einem ähnlichen Aufzeichnungsverfahren, die Aufzeichnungen ausschließlich berührungsabhängig erfolgen.

Beispielhaft für derart einschränkende Aufzeichnungsbedingungen sind bekanntlich Fahrtschreiber, auf deren Aufzeichnungsträger einerseits eine Fülle von Daten aufgezeichnet werden soll, andererseits jedoch sowohl Konstruktions- und Einbauprobleme, als auch Handhabungs- und Kontrollerfordernisse vorrangig zu berücksichtigen sind, so daß ein Aufzeichnungsverfahren mit einem Aufzeichnungsträger mit relativ kleiner Aufzeichnungsfläche, im allgemeinen mit einer Diagrammscheibe, und einer möglichst langen Transportdauer verwirklicht werden muß. Ferner muß es das Aufzeichnungsverfahren, was trotz der in Kauf zu nehmenden Mängel wirtschaftlich bekanntlich nur mit dem Wachspapier-Aufzeichnungsverfahren möglich ist, gestatten, daß auf ein und derselben Diagrammscheibe, beispielsweise bezüglich der in Fahrtschreibern üblichen Geschwindigkeitsregistrierung, Feinstrichdiagramme mit wegen der für Unfallauswertungen erforderlichen hohen zeitlichen Auflösbarkeit und gleichzeitig bezüglich verschiedener, anderer Betriebsbedingungen eines Kraftfahrzeuges sowie bezüglich der Arbeitszeiten der Fahrer auch ohne optische Hilfsmittel lesbare Übersichtsdiagramme — die bewährte, eine gewisse Signalwirkung bietende Darstellungsform sind bekanntlich Balkendiagramme — aufgezeichnet werden.

Mit der DE-A 22 31 545 ist nun eine Aufzeichnungsanordnung bekannt geworden, die einen quer zur Transportrichtung des Aufzeichnungsträgers stetig hin und her bewegten Schlitten aufweist, an welchem ein im wesentlichen senkrecht zur Aufzeichnungsfläche bewegbares Aufzeichnungsorgan gelagert ist. Das Aufzeichnungsorgan wird betätigt durch einen Elektromagneten, der seinerseits mittels eines in getrieblicher Verbindung mit dem den Schlitten antreibenden Motor stehenden Schleifkontaktdrehschalters steuerbar ist. Mit dieser Aufzeichnungseinrichtung ist zwar eine Verdichtung der Übersichtsdiagramme möglich, der hierfür erforderliche Aufwand zweier Antriebe, nämlich einerseits eines Synchronmotors, andererseits eines Elektromagneten, ist, abgesehen von dem vorgesehenen, verschleißbehafteten und verschmutzungsempfindlichen Schleifkontaktdrehschalter, der Geräuschbildung beim Anheben und Abheben des Aufzeichnungsorgans und dem erforderlichen Raumbedarf unangemessen hoch.

Auf der anderen Seite zeigt die DE-A 23 35 340 eine Aufzeichnungsanordnung mit lediglich einem Antriebsmotor, wobei das Aufzeichnungsorgan in der einen Bewegungsrichtung quer zur Transportrichtung des Aufzeichnungsträgers stets auf dem Aufzeichnungsträger aufliegt, während in der entgegengessetzten Bewegungsrichtung das Aufzeichnungsorgan vom Aufzeichnungsträger angehoben ist. Die Heb- und Senkbewegung des Aufzeichnungsorgans erfolgt durch Drehrichtungsumkehr des verwendeten Antriebsmotors und dadurch, daß in der getrieblichen Verbindung zwischen einer vom Antriebsmotor getriebenen Gewindespindel und einem das Aufzeichnungsorgan tragenden, der Gewindespindel zugeordneten Aufzeichnungskopf eine gewisse, einstellbare Friktion vorgesehen ist. Diese Aufzeichnungsanordnung zeigt zwar eine Lösungsmöglichkeit für einen zweidimensionalen Antrieb eines Registrierorgans mit lediglich einem Antriebsmotor, sie ist jedoch nur für ein nicht ausschließlich berührungsabhängig wirkendes Aufzeichnungsverfahren geeignet, bei dem — in diesem Falle handelt es sich um das allgemein bekannte Metallpapier-Aufzeichnungsverfahren — die Aufzeichnungen durch zwischen dem Aufzeichnungsträger und dem als Elektrode ausgebildeten Aufzeichnungsorgan fließende Registrierströme erzeugt werden.

Ziel ist es daher, mit lediglich einem Antrieb auszukommen.

Die Lösung dieser Aufgabe ist in den Ansprüchen 1 und 2 angegeben Vorteilhafte Ausgestaltungen der Aufzeichnungsanordnung sind den abhängigen Ansprüchen zu entnehmen.

Der entscheidende Vorteil, ist zweifelsfrei darin zu sehen, daß es ermöglicht wird, das angestrebte Aufzeichnungsverfahren mit nur einem Antriebselement, vorzugsweise einem Schrittmotor, durchzuführen, wobei die Möglichkeiten eines derartigen Motors zusammen mit geeigneten, dem Motor zugeordneten getrieblichen Mitteln in optimaler Weise genutzt sind. Dies bedeutet, abgesehen von der erzielbaren Fertigungskostenverringerung eine Verringerung des Energiebedarfs und somit auch eine Verminderung der Abwärme, die insbesondere bei Geräten mit relativ hoher Packungsdichte oft erhebliche Probleme mit sich bringt. Ferner sind stör- und verschleißanfällige Bauteile weitgehend vermieden und infolge einer gezielten Anordnungsoptimierung der in Wirkverbindung stehenden Bauteile sowie die Verwendung großserientypischer Bauteile der Raumbedarf erheblich reduziert.

Im folgenden sei die Erfindung anhand der beigefügten Zeichnungen näher erläutert. Es zeigen

Figur 1 ein Bewegungsdiagramm eines erfindungsgemäß gesteuerten Aufzeichnungsorgans.

Figur 2 eine perspektivische Darstellung der wesentlichen Bauelemente eines Ausführungsbeispieles der Aufzeichnungsanordnung mit der die Erfindung durchführbar ist.

Figur 3 eine Draufsicht eines bevorzugten Ausführungsbeispieles der Aufzeichnungsanordnung,

Figur 4 eine Ansicht des Ausführungsbeispieles gemäß Fig. 3 in axialer Richtung,

Figur 5 eine Teilschnittdarstellung gemäß der Schnittlinie A in Fig. 3,

Figur 6 bis 14 als Seitenansichten der Aufzeichnungsanordnung gemäß Fig. 3 dargestellte Funktionsstellungen mit jeweils einer Teilansicht der Stellung des Anheben und Absenken steuernden Mitnehmers sowie der Stellung der Nocken-Stift-Verbindung zwischen Schlitten und Sperrschlitten.

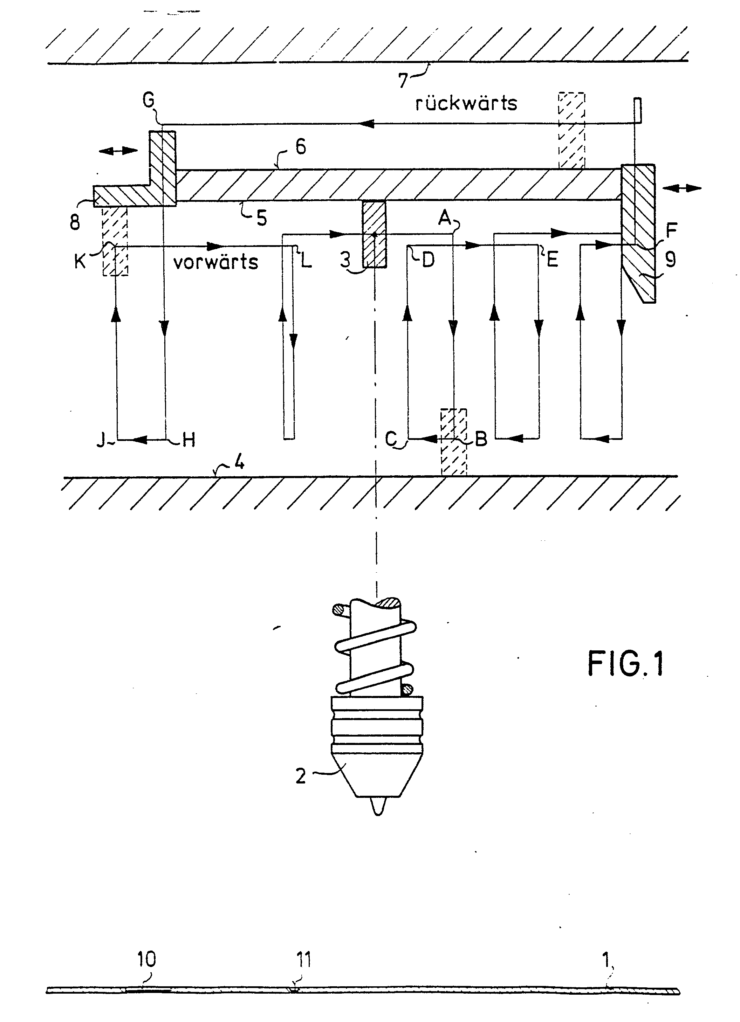

Das in Figur 1 dargestellte Bewegungsdiagramm stellt ein Steuerungsbeispiel eines auf einem Aufzeichnungsträger 1 wirksamen Aufzeichnungsorgans 2 dar, wobei, was weitgehend schematisch dargestellt ist, zur Verwirklichung des Bewegungsdiagramms einem mit dem Aufzeichnungsorgan 2 gekoppelten, in Fig. 1 im Querschnitt gezeichneten Arm 3 geeignete Anschläge 4, 5, 6, 7, die dem Arm 3 zusätzlich als Führungsbahnen dienen, sowie gefedert gelagerte, in den dargestellten Pfeilrichtungen bewegbare Sperrglieder 8 und 9 zugeordnet sind. In der in Fig. 1 dargestellten Stellung des Armes 3 befindet sich dieser und somit das Aufzeichnungsorgan 2 in einem ersten Führungszustand, welcher dadurch gekennzeichnet ist, daß sich der Arm 3 und das Aufzeichnungsorgan 2 in Pfeilrichtung definitionsgemäß « vorwärts bewegen » und gleichzeitig ein Stellmoment wirksam ist, das bewirkt, daß der Arm 3 an der Führungsbahn 5 anliegt und das Aufzeichnungsorgan vom Aufzeichnungsträger 1 angehoben ist. Hat nun in diesem ersten Führungszustand der Arm 3 bzw. dessen der Linie des Bewegungsdiagramms folgenden Querschnittsflächenschwerpunkt den Punkt A des Bewegungsdiagramms erreicht, so soll programmgemäß auf dem Aufzeichnugsträger 1 eine Aufzeichnung eingeleitet werden. Hierzu wird die Drehrichtung des das Aufzeichnungsorgan 2 quer zur Transportrichtung des Aufzeichnungsträgers 1 hin und her bewegenden, in Fig. 1 jedoch nicht dargestellten Antriebsmotors umgekehrt, wodurch der Arm 3 in Pfeilrichtung in einen zweiten Führungszustand verschwenkt wird, in welchem er unter der Wirkung des in seiner Wirkungsrichtung ebenfalls umgekehrten Stellmomentes an der Führungsbahn 4 anschlägt und nachfolgend definitionsgemäß « rückwärts » an dieser Führungsbahn 4 entlanggleitet bzw. im Bewegungsdiagramm von Punkt B nach Punkt C bewegt wird. Bei dieser Bewegung erfolgte gleichzeitig, da beim Verschwenken des Armes 3 in den zweiten Führungszustand das Aufzeichnungsorgan 2 auf den Aufzeichnungsträger 1 abgesenkt worden ist, eine Aufzeichnung in Form eines in seiner Länge programmgemäß festgelegten Striches quer zur Transportrichtung des Aufzeichnungsträgers 1. Wird nun bei dem in Punkt C des Bewegungsdiagramms gegebenen Steuerungszustand wiederum eine Drehrichtungsumkehr des Antriebsmotors eingeleitet, was bedeutet, daß der Arm 3 bei gleichzeitigem Anheben des Aufzeichnungsorgans 2 von dem Aufzeichnungsträger 1 in Richtung Punkt D des Bewegungsdiagramms und somit in den ersten Führungszustand zurückgeführt wird und nachfolgend — die versetzte Darstellung der einzelnen Teile des Bewegungsdiagramms in « Vorwärtsrichtung » ist lediglich der besseren Übersicht wegen gewählt worden — der Arm 3 und das Aufzeichnungsorgan 2, ohne daß eine Aufzeichnung erfolgt, in diesem Falle bis zum Erreichen des Diagrammpunktes E in Vorwärtsrichtung weiterbewegt werden. Der geschilderte Ablauf des Wirksammachens des Aufzeichnungsorgans 2 auf dem Aufzeichnungsträger 1 ist nun solange wiederholbar bis im Punkt F des Bewegungsdiagramms eine Grenzstellung erreicht ist, in der der Arm 3 das gefedert gelagerte Sperrglied 9 verschwenkt hat, unter der Wirkung des gegen die Führungsbahn 5 gerichteten Stellmoments selbsttätig die Führungsbahn 5 verlassen kann und am Anschlag 7 anschlägt. In dem nunmehr erreichten Steuerungszustand würden der Arm 3 und das Aufzeichnungsorgan 2 in Vorwärtsrichtung weiterbewegt werden, wenn nicht durch das den Bewegungsablauf steuernde Programm oder einen beim Verlassen des ersten Führungszustandes durch Betätigen einer Lichtschranke ausgelösten Schaltvorgang die Drehrichtung des Antriebsmotors umgesteuert werden würde. Die Rückkehr des Armes 3 in den eben verlassenen zweiten Führungszustand ist aber durch Zurückfedern des Sperrgliedes 9 versperrt, so daß sich der Arm 3 und das Aufzeichnungsorgan 2 in einem dritten Führungszustand befinden, in dem der Arm 3 und das Aufzeichnungsorgan 2 zwar quer zum Aufzeichnungsträger 1 « rückwärts » bewegt werden, ein Aufzeichnen aber durch die Führungsbahn 6 verhindert bzw. verriegelt ist. Erst beim Erreichen einer weiteren Grenzstellung kann, nachdem das Sperrglied 8 verschwenkt worden ist, unter dem Einfluß des bei der « Rückwärtsbewegung » wirksamen Stellmomentes ein Übergang von dem dritten Führungszustand (Punkt G) in den zweiten Führungszustand (Punkt H) erfolgen. Aus dieser Position heraus, in der auch das Aufzeichnungsorgan 2 auf den Aufzeichnungsträger 1 abgesenkt worden ist, läßt sich bei Beibehaltung der Drehrichtung des Antriebsmotors und somit bei weiterer Rückwärtsbewegung des Aufzeichnungsorgans 2 unmittelbar eine Aufzeichnung 10 vornehmen, die im Punkt I des Bewegungsdiagramms programmgemäß durch Umsteuern der Drehrichtung des Antriebsmotors unterbrechbar ist, d. h. der Arm 3 und somit das Aufzeichnungsorgan 2 werden in den ersten Führungszustand zurückgeführt, im welchem der Arm 3, ausgehend von Punkt K, zunächst auf dem tischartig ausgebildeten Sperrglied 8 anschlägt und an diesem sowie an der Führungsbahn 5 in « Vorwärtsrichtung » entlang gleitet bis in Punkt L wiederum ein Aufzeichnungszyklus ausgelöst wird, bei dem beispielsweise eine Aufzeichnung in Form eines Striches 11 entsteht.

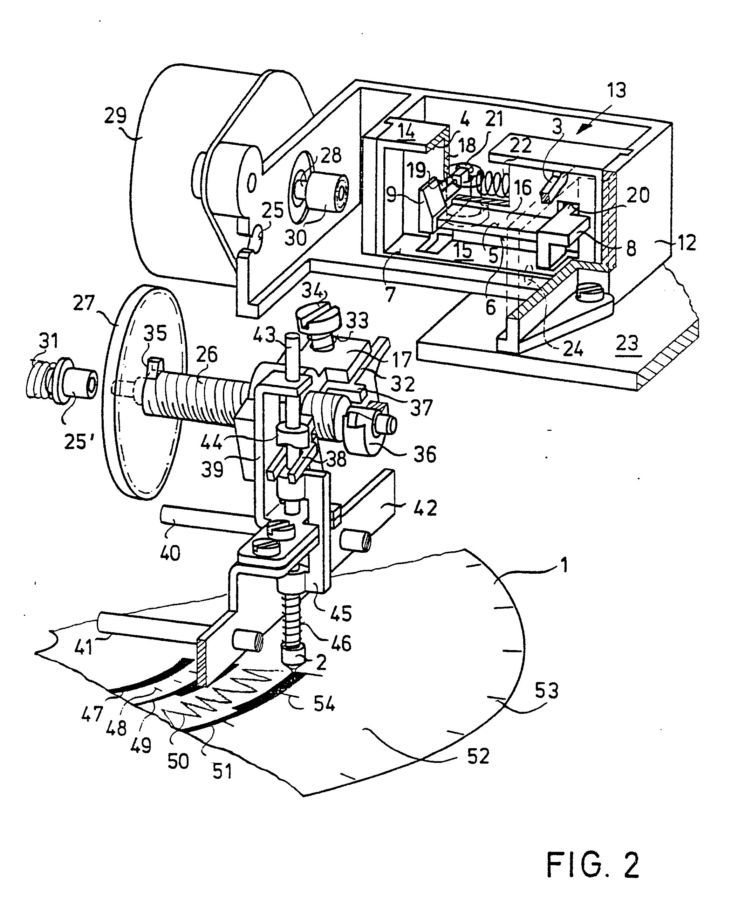

Für das in Fig. 2 gezeichnete Ausführungsbeispiel einer Aufzeichnungsanordnung, mit der der geschilderte Bewegungsablauf verwirklicht werden kann, ist der Übersichtlichkeit wegen eine teilweise Explosionsdarstellung lediglich der erfindungswesentlichen Bauteile gewählt worden. Diese zeigt einen in einem Gestell 12 eingesetzten Kulissenkörper 13, dessen Wände 14, 15 und 16 die Schwenkbewegungen des in den Kulissenkörper 13 eingreifenden, an einem Stellelement 17 ausgebildeten Armes 3 begrenzende Anschläge darstellen, wobei die jeweiligen Anschlag-bzw. Wandflächen die beschriebenen, dem Arm 3 zugeordneten Führungsbahnen 4, 5, 6 und 7 bilden. Wie ferner aus Fig. 2 ersichtlich ist, ragen die mit den Führungsbahnen 5 und 6 zusammenwirkenden Sperrglieder 8 und 9 durch geeignete, in der Rückwand 18 des Kulissenkörpers 13 ausgebildete Durchbrüche 19 und 20 in den Kulissenkörper 13 hinein und sind auf in dem Gestell 12 befestigten Achsen, von denen eine — 21 — dargestellt ist — drehbar gelagert. Eine an beiden Sperrgliedern 8 und 9 angreifende Feder 22 liefert den Kraftschluß zwischen den Sperrgliedern 8 und 9 der Wand 16 und somit den Führungsbahnen 5 und 6 Kulissenkörpers 13.

Im Gestell 12, das auf einer gehäusefesten Platte 23 montiert ist, ist ferner eine in geeigneter Weise durch Einstecken in die nicht näher bezeichneten Seitenwände des Gestells 12 bzw. in die dort ausgebildete Lagerbohrung 24 und die geschlitzte Lagerstelle 25, der eine Lagerbuchse 25' zugeordnet ist, vorzugsweise mehrgängige Gewindespindel 26 gelagert, deren antreibendes, mit der Gewindespindel 26 vorzugsweise einstückig ausgebildetes Zahnrad 27 in getrieblicher Verbindung mit einem auf der Welle 28 eines an dem Gestell 12 angeflanschten, als Antriebsmotor dienenden Schrittmotors 29 befestigten Ritzels 30 steht. Mit 31 ist eine sich einerseits an der Lagerbuchse 25', andererseits am Flansch des Antriebsmotors 29 abstützende Druckfeder bezeichnet, die der Kompensation des beim Aufzeichnen sich ergebenden erhöhten Axialschubes dient. Wie der Fig. 2 weiter entnommen werden kann, steht das als Wandermutter ausgebildete Stellelement 17 getrieblich in Eingriff mit der Gewindespindel 26, d. h. das Stellelement 17 wird mittels eines Schraubgetriebes betätigt. Das Stellelement 17 ist halbseitig mit einem Schlitz 32 versehen, der zusammen mit einer mit einer Druckfeder 33 in Wirkverbindung stehenden Stellschraube 34 die Einstellung einer zwischen der Gewindespindel 26 und dem Stellelement 17 wirksamen, die Schwenkbewegungen des Stellelementes 17 ermöglichenden Friktion gestattet. In fertigungstechnisch vorteilhafter Weise kann das Stellelement 17 beispielsweise auch als zwei zusammenfügbare und mit der Stellschraube 34 verbindbare Einzelbauteile hergestellt sein. Gegenseitig zusammenwirkende Anschläge, von denen einer — 35 — unmittelbar an der Gewindespindel 26 bzw. an deren antreibendem Zahnrad 27 ausgebildet, ein anderer — 36 — in Form einer Anschlagscheibe auf der Gewindespindel 26 befestigt ist sowie diesen zugeordnete, am Stellelement 17 ausgebildete Anschläge, von denen einer — 37 — sichtbar ist, dienen dem Stellelement 17 als Endanschläge, um dessen Festlaufen in den Grenzstellungen zu vermeiden.

Wie bereits geschildert, ist an dem Stellelement 17 der mit dem Kulissenkörper 13 zusammenwirkende Arm 3 ausgebildet. Ein an dem Stellelement 17 außerdem angeformter Hebel 38 dient als Mitnehmer, indem er den in einer Lagerbrücke 39, die ihrerseits auf einem auf zwei ortsfest angeordneten Führungsstangen 40 und 41 verschiebbar gelagerten Schlitten 42 befestigt ist — von dem Schlitten 42 ist in Fig. 2 lediglich ein Quersteg dargestellt — senkrecht zum Aufzeichnungsträger 1 geführten Schaft 43 des Aufzeichnungsorgans 2 gabelförmig umgreift. Über einen an dem Schaft 43 befestigten Bund 44, an dem zur Erzielung einer linienhaften Berührung mit dem Hebel 38 eine nicht näher bezeichnete Schneide ausgebildet ist, ist das Aufzeichnungsorgan 2 vom Aufzeichnungsträger 1 durch Verschwenken des Stellelementes 17 anhebbar, während das Absenken des Aufzeichnungsorgans 2 auf den Aufzeichnungsträger 1 mittels eines ebenfalls über eine Schneide mit dem Hebel 38 in Verbindung stehenden, auf dem Schaft 43 verschiebbar gelagerten Bügel 45 erfolgt. Dabei steht der Bügel 45 über eine sich an dem Bügel 45 abstützende, auf dem Schaft 43 angeordnete, die Schreibkraft liefernde Druckfeder 46 teleskopartig in Wirkverbindung mit dem Aufzeichnungsorgan 2.

Der in Fig. 2 dargestellte Ausschnitt eines Aufzeichnungsträgers 1, in diesem Falle einer Diagrammscheibe, zeigt in einer ersten Spur beispielsweise ein in seiner Breite gleichbleibendes Balkendiagramm 47, in einer zweiten Spur Strichmarkierungen 48, in einer dritten Spur ein gestuftes Balkendiagramm 49, in einer vierten Spur ein zickzackförmiges Liniendiagramm 50, welches durch einzelne, aneinandergefügte Strichelemente bzw. durch eine Punktereihe gebildet sein kann, sowie in einer fünften Spur wiederum ein programmgemäß gestuftes Balkendiagramm 51. Der freie Raum 52 zwischen einer bei derartigen Aufzeichnungsträgern üblichen, aufgedruckten Zeitskala 53 und den erwähnten Aufzeichnungsspuren dient beispielsweise im Anwendungsfall Fahrtschreiber der Aufzeichnung von Geschwindigkeitsdiagrammen mittels eines weiteren, weil nicht erfindungswesentlich nicht dargestellten Aufzeichnungsorgans. Selbstverständlich ist es — eine entsprechende Programmierung vorausgesetzt — möglich, eine Zeitskala bzw. Zeitmarkierungen 54 mit der erfindungsgemäßen Aufzeichnungsanordnung in einer weiteren Spur aufzuzeichnen oder unmittelbar an beispielsweise das Balkendiagramm 51 anzufügen.

Erwähnt sei ferner, daß das Aufzeichnungsorgan 2 beispielsweise mittels eines Kugelgelenkes mit dem Hebel 38 gekoppelt oder unmittelbar, d. h. starr, an dem Stellelement 17 angeordnet sein kann. Auch ist es denkbar, als Aufzeichnungsorgan einen Faserschreiber oder ein ähnliches Aufzeichnungsmittel vorzusehen.

Da das für die Stellfunktion des Stellelementes 17, d. h. für das Anheben und Absenken des Aufzeichnungsorgans 2 erforderliche Dreh- bzw. Stellmoment ein erhebliches, in der getrieblichen Verbindung zwischen der Gewindespindel 26 und dem Stellelement 17 wirksames und bei der Axialbewegung des Stellelementes 17 zu überwindendes Friktionsmoment erfordert, ist das beschriebene Ausführungsbeispiel gemäß Fig. 2 in hohem Maße verschleißgefährdet, zumal, abgesehen davon, daß ein durch aneinander reibende Gewindeflanken gebildetes Friktionsmoment nur eine bedingte Kontinuität aufweist, in diesem Falle die Bildung des Friktionsmomentes an relativ kleinen Reibradien erfolgt.

Es ist daher, um diese Mängel eines Schraubgetriebes zu umgehen, denkbar und liegt durchaus innerhalb des Rahmens der Erfindung, den Schlitten 42 bzw. den Träger des Aufzeichnungsorgans 2 unter Zwischenschaltung einer geeigneten Getriebeverbindung unmittelbar durch den Antriebsmotor 29 zu bewegen, dem Stellelement 17 eine geeignete Führung zuzuordnen und das Stellelement 17 im Gegensatz zum Ausführungsbeispiel gemäß Fig. 2 mittels des Schlittens 42 bzw. mittels des Aufzeichnungsorgans 2 zu führen. Zur Bildung des für die Betätigung des Aufzeichnungsorgans 2 senkrecht zum Aufzeichnungsträger 1 erforderlichen Stellmomentes könnte in diesem Falle ein vorzugsweise scheibenförmiger Mitnehmer vorgesehen sein, der mit einem im Getriebezweig zwischen dem Antriebsmotor 29 und dem Schlitten 42 befindlichen Getriebeelement in friktioneller Verbindung steht, wobei eine konzentrische Anordnung des Stellelementes und des mit dem Mitnehmer friktionell verbundenen Getriebeelementes zweckmäßig ist.

Mit einer solchen Anordnung muß aber in Kauf genommen werden, daß im Gegensatz zu einer Lösung mittels eines Schraubgetriebes während des Absenkens und des Anhebens des Aufzeichnungsorgans 2 gleichzeitig eine Bewegung quer zum Aufzeichnungsträger 1 erfolgt. Dies führt, abgesehen von der Gefahr des Verwischens der Aufzeichnungen, zu einem nicht mehr tragbaren Aufzeichnungsversatz dann, wenn beispielsweise Diagrammscheibenbündel als Aufzeichnungsträger Anwendung finden. Um in solchen Fällen ein senkrechtes Aufsetzen des Aufzeichnungsorgans 2 auf den Aufzeichnungsträger 1 zu gewährleisten, muß die Forderung « Stillstand des Schlittens beim Absenken des Aufzeichnungsorgans » erfüllt werden.

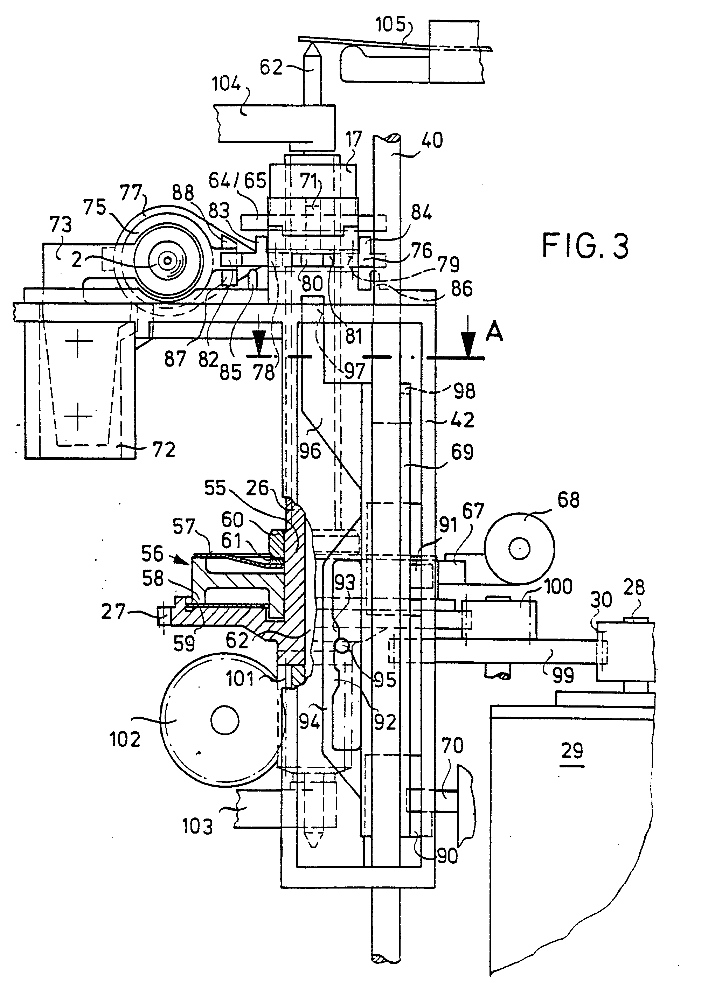

Das bevorzugte Ausführungsbeispiel gemäß Fig. 3 — funktionell gleiche Bauteile sind in den Fig. 3 bis 14 gleich bezeichnet wie in der Fig. 2 — trägt dieser Forderung Rechnung, indem zwar ein Schraubgetriebe für die Bewegung des Aufzeichnungsorgans 2 quer zum Aufzeichnungsträger 1 Anwendung findet und somit dessen Vorzüge genutzt sind, das Stellmoment für das Anheben und Absenken des Aufzeichnungsorgans 2 senkrecht zum Aufzeichnungsträger 1 aber außerhalb des Schraubgetriebes erzeugt wird. Dabei läßt sich das Schraubgetriebe durch eine geeignete Werkstoffpaarung, beispielsweise Kunststoffpaarung, und eine geeignete Gewindeform, beispielsweise ein Trapezgewinde, in besonderer Weise reibungs- und somit verschleißarm ausbilden, also für den Dauerbetrieb geeignet machen, während für die Bildung des Stellmomentes vorzugsweise eine Anordnung gewählt wird, wie sie bereits angedeutet worden ist, nämlich eine Friktionskupplung mit einem auf einem zylindrischen Ansatz 55 der Gewindespindel 26 des Schraubgetriebes drehbar gelagerten, scheibenförmigen Mitnehmer 56, welcher sich unter der Wirkung einer Scheibenfeder 57 mit einem ringförmigen Bund 58 vorzugsweise unter Zwischenlage einer Scheibe 59 an der einen, nicht näher bezeichneten Stirnfläche des mit der Gewindespindel 26 ein Teil bildenden Zahnrades 27 abstützt. Dabei dient ein auf dem Ansatz 55 der Gewindespindel 26 aufpreßbarer Bund 60 einerseits der Einstellung der Vorspannung der Scheibenfeder 57, andererseits gemeinsam mit einer Lagerscheibe 61 als Gegenlager. Die Mitnahme des in diesem Falle wiederum als Wandermutter ausgebildeten Stellelementes 17 im Umfangsrichtung erfolgt mittels eines am Mitnehmer 56 ausgebildeten und sich parallel zur Gewindespindel 26, die als Hohlwelle ausgebildet und auf einer Welle 62 aufgepreßt ist, erstreckenden Führungssteges 63 — der Übersichtlichkeit wegen wurde auf eine Darstellung des Führungssteges 63 in der Fig. 3 verzichtet — indem ein an dem Stellelement 17 ausgebildeter Bund 64, der in einen Arm 65 übergeht, den Führungssteg 63 gabelförmig umgreift. Da in diesem Falle das Stellmoment an einem relativ großen Friktionsradius gebildet wird, kann, abhängig selbstverständlich vom Stellmomentsbedarf, der durch die Friktionskupplung gedeckt werden soll, der Friktionskoeffizient der in Friktionsverbindung stehenden Bauelemente relativ gering sein, so daß als Werkstoff für die Scheibe 59 beispielsweise ein als Gleitlagerwerkstoff bekannter Fluorkunststoff verwendbar ist.

Somit ist, abgesehen davon, daß definierte Reibflächen gegeben sind, auch der Verschleiß der das Stellmoment liefernden Anordnung vernachlässigbar gering. Andererseits wirken sich die getroffenen Maßnahmen auch auf den Drehmomentsbedarf des antreibenden Schrittmotors 29, der verständlicherweise soweit als möglich zu minimieren ist, vorteilhaft aus. Dabei ist das vom Schrittmotor 29 aufzubringende Antriebsdrehmoment von Reibungsverlusten in der Getriebeverbindung abgesehen, wenigstens durch das zu überwindende Aufzeichnungsmoment und das von der Friktionskupplung erzeugte Stellmoment, mit dem der Sicherheit wegen mindestens das 2- bis 2,5 fache der durch die Druckfeder 46 gegebenen, ein Aufzeichnen ermöglichenden Auflagekraft erzielbar sein muß, bestimmt.

Es sei noch erwähnt, daß die Friktionskupplung beispielsweise durch ein in geeigneter Weise angeordnetes, jeweils bei Drehrichtungsumkehr in und wieder außer Eingriff mit der Antriebsverbindung zwischen dem Schrittmotor 29 und dem Stellelement 17 gelangendes Zahnsegment ersetzbar ist.

Zur Bildung der verschiedenen Führungszustände ist es nun denkbar, daß ein in geeigneter Weise verlängerter Arm mit einer ähnlichen Kulissenanordnung wie sie bereits beschrieben worden ist, zusammenwirkt. Die in Form des Ausführungsbeispieles gemäß Fig. 3 vorgeschlagene Lösung bietet jedoch erhebliche bauliche Vorteile, indem einerseits am Mitnehmer 56 ausgebildete Anschläge 66 und 67 vorgesehen sind, die mit einem ortsfesten Anschlag 68 zusammenwirken, womit die beiden ersten Führungs-zustände verwirklicht werden können, andererseits dem das Aufzeichnungsorgan 2 tragenden Schlitten 42 ein von diesem parallel mitgeführter Sperrschlitten 69 zugeordnet ist, der ebenfalls mit einem ortsfesten Anschlag 70 zusammenwirkt und der, was im folgenden noch eingehender erläutert werden wird, den dritten Führungszustand zu verwirklichen gestattet.

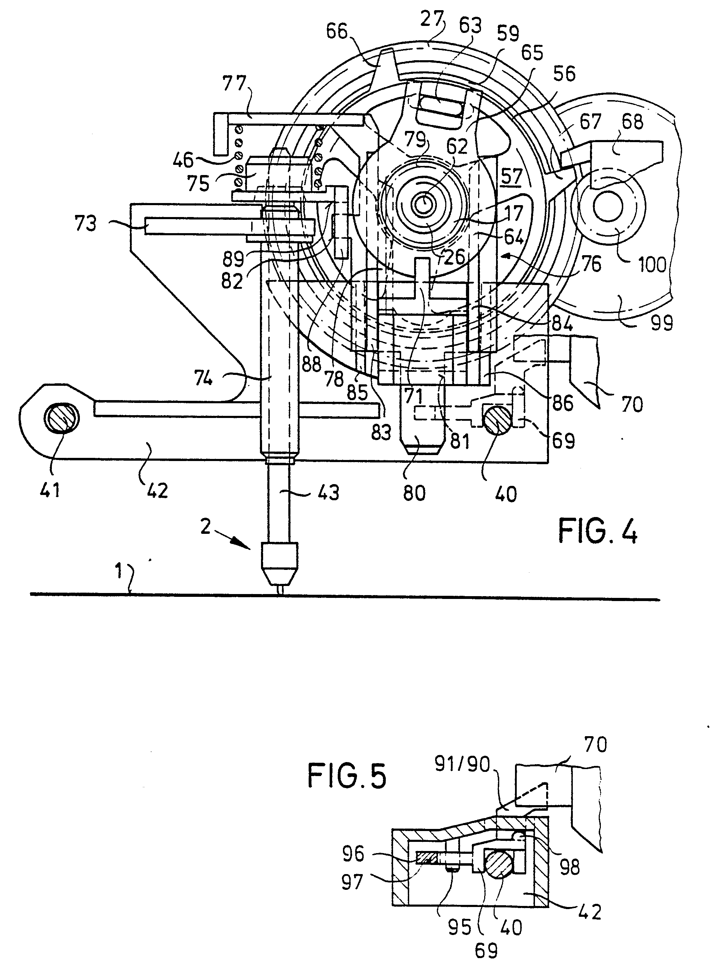

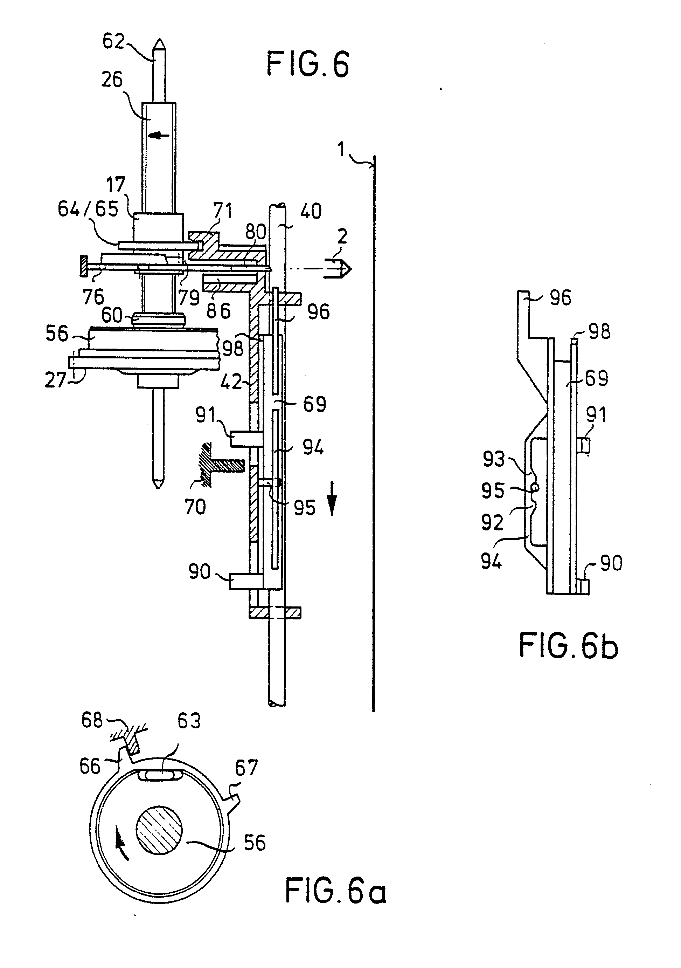

Im einzelnen zeigen die Fig. 3 und 4, wobei die Fig. 3 eine Untersicht darstellt, daß der auf den gehäusefest angeordneten Führungsstangen 40 und 41 verschiebbar gelagerte Schlitten 42 unmittelbar mit dem Stellelement 17 in Wirkverbindung steht und somit dessen Mitnahme quer zum Aufzeichnungsträger 1 bewirkt wird, indem ein am Schlitten 42 angeformter Arm 71 (siehe auch Fig. 6) bzw. dessen gabelförmig ausgebildetes freies Ende an dem Bund 64 des Stellelementes 17 angreift. Denkbar ist in diesem Falle auch eine Nut-Stift-Verbindung, wobei die Nut im Stellelement 17 angeordnet sein müßte. Eine am Schlitten 42 ausgebildete Konsole oder Tasche 72 dient der Befestigung eines das Aufzeichnungsorgan 2 tragenden Halters 73, an welchem eine der Führung des Schaftes 43 des Aufzeichnungsorgans 2 dienende Lagerhülse 74 angeordnet ist. Im Gegensatz zum Ausführungsbeispiel gemäß Fig. 2 ist beim Ausführungsbeispiel gemäß Fig. 3 auf dem Schaft 43 eine Buchse 75 befestigt, die der Aufnahme der die Auflagekraft des Aufzeichnungsorgans 2 auf dem Aufzeichnungsträger 1 liefernden und sich mit ihrem einen Ende an einer an einem Schieber 76 angeformten, tellerförmigen Auflage 77 abstützenden Druckfeder 46 dient. Mit einer an dem Schieber 76 ausgebildeten Verzahnung 78 steht der Schieber 76, indem er als Zahnstange dient, getrieblich in Eingriff mit einer an dem Stellelement 17 vorgesehenen Verzahnung 79 und greift mit einer Zunge 80 durch eine in dem Schlitten 42 ausgebildete Öffnung 81 hindurch. Ferner ist der Schieber 76, an dem eine Nase 82 ausgebildet ist, durch zwei das Stellelement 17 umgreifende Wangen 83 und 84 am Stellelement 17 geführt und durch am Schlitten 42 angeformte Rippen 85 und 86 sowie durch den Bund 64 stirnseitig gestützt.

Die erwähnte, am Schieber 76 ausgebildete Nase 82 dient einerseits, indem sie zwischen zwei an der Buchse 75 angeformte Stege 87 und 88 eingreift, dem Aufzeichnungsorgan 2 als Verdrehsicherung, andererseits wird über die Nase 82, wenn diese — ausgehend von dem in Fig. 4 dargestellten Führungszustand — bei Drehrichtungsumkehr und somit beim Verstellen des Schiebers 76 nach einem gewissen, für die Federungsfähigkeit des auf dem Aufzeichnungsträger 1 aufliegenden Aufzeichnungsorgan 2 erforderlichen Leerlaufs, an der Flanschfläche 89 der Buchse 75 anschlägt, das Aufzeichnungsorgan 2 vom Aufzeichnungsträger 1 angehoben.

Wie bereits beschrieben, wird der Sperrschlitten 69, der, wie dargestellt, auf der Führungsstange 40 reitend angeordnet ist, vom Schlitten 42, und zwar aufgrund einer gewissen Friktion zwischen den beiden Schlitten 42 und 69, mitgeführt. Dabei wirken am Sperrschlitten 69 ausgebildete Anschlagarme 90 und 91 mit dem ortsfesten Anschlag 70 zusammen. Außerdem ist am Sperrschlitten 69 ein mit zwei Nocken 92 und 93, die mit einem im Schlitten 42 befestigten Stift 95 zusammenwirken, versehener Bügel 94 federungsfähig angeformt. Ferner ist an dem Sperrschlitten 69 ein Finger 96 ausgebildet, der durch einen im Schlitten 42 befindlichen, relativ eng tolerierten Durchbruch 97 hindurchgreift. Mit einem Wulst 98, der am Schlitten 42 anliegt, ist, wie dem Schnittbild Fig. 5 entnommen werden kann, einerseits ein dem Spielausgleich dienendes Verspannen des Sperrschlittens 69 zwischen der Führungsstange 40 und dem Schlitten 42 beabsichtigt, andererseits wird eine Friktionsverstärkung zwischen dem Sperrschlitten 69 und dem Schlitten 42 erzielt.

Der Vollständigkeit halber sei noch nachgetragen, daß in der Antriebsverbindung zwischen dem auf der Motorwelle 28 befestigten Ritzel 30 und dem koaxial mit dem Schraubgetriebe angeordneten Zahnrad 27 ein Zahnradpaar 99, 100 eingeschaltet ist und daß der Antrieb des Schrittmotors 29 zusätzlich nutzbar ist, indem beispielsweise über eine mit der Gewindespindel 26 gekoppelte Schnecke 101 und ein Schneckenrad 102 ein weiteres, nicht dargestelltes Aufzeichnungsorgan betätigbar ist. Außerdem sei nachgetragen, daß die Welle 62 des Schraubgetriebes ortsfest in Lagerungen 103 und 104 gelagert ist und unter der Wirkung einer ortsfest eingespannten, eine gewisse Vorspannung aufweisenden Blattfeder 105 steht, die, wie bereits im Zusammenhang mit dem Ausführungsbeispiel gemäß Fig. 2 beschrieben wurde, der Kompensation des insbesondere beim Aufzeichnen bestehenden, relativ starken Axialschubes dient.

Im folgenden sei die Funktion des zuletzt beschriebenen Ausführungsbeispiels anhand der in den Fig. 6 bis 14, die charakteristische Funktionsstellungen der erfindungsgemäßen Aufzeichnungsanordnung darstellen, erläutert. Zum besseren Verständnis sind den Fig. 6 bis 14, die im wesentlichen als Seitenansichten der Fig. 3 gezeichnet sind, jeweils eine Ansicht der Stellung des Mitnehmers 56 in bezug auf den ortsfesten Anschlag 68 und eine Ansicht der Stellung des Sperrschlittens 69 in bezug auf den am Schlitten 42 angeordneten Stift 95 zugeordnet. Vom Aufzeichnungsorgan 2 ist der Übersichtlichkeit wegen lediglich dessen Spitze schematisch dargestellt. Aus demselben Grund ist in den Funktionsstellungen, in denen der Führungssteg 63 gestrichelt darzustellen wäre, auf dessen Darstellung verzichtet worden. Ferner sei darauf hingewiesen, daß die dem Schlitten 42 und der Gewindespindel 26 zugeordneten Pfeile die Bewegungsrichtung dieser Bauteile kennzeichnen sollen, während der jeweils dem Mitnehmer 56 zugeordnete Pfeil die Wirkungsrichtung des am Mitnehmer 56 wirkenden Drehmomentes bezeichnet. Außerdem ist zu beachten, daß bei der gewählten Darstellung die Gewindespindel 26 mit einem links steigenden Gewinde versehen ist.

Die Fig. 6 betreffen nun eine Funktionsstellung der Aufzeichnungsanordnung, die bei einer beliebigen, dem sog. ersten Führungszustand entsprechenden Position bezüglich des Registrierfeldes gegeben sein kann, d. h. der Schlitten 42 und somit das Aufzeichnungsorgan 2 werden « vorwärts bewegt ». Dabei ist der Drehsinn des Schrittmotors 29 und somit der Gewindespindel 26 derart, daß über das Stellelement 17 — der Mitnehmer 56 liegt mit seinem Anschlag 66 am ortsfesten Anschlag 68 an - am Schieber 76 ein Stellmoment im Sinne von Anheben des Aufzeichnungsorgans 2 vom Aufzeichnungsträger 1 wirksam ist. Infolge der Friktion zwischen Schlitten 42 und Sperrschlitten 69, die aufgrund der getroffenen Maßnahmen, nämlich der relativ engen Passung zwischen dem Finger 96 und dem diesem im Schlitten 42 zugeordneten Durchbruch 97 sowie dem sich am Schlitten abstützenden Wulst 98 größer ist als die Gleitreibung zwischen dem Sperrschlitten 69 und der Führungsstange 40, wird der Sperrschlitten 69 vom Schlitten 42 in der in Fig. 6b gezeigten Stellung mitgeschleppt.

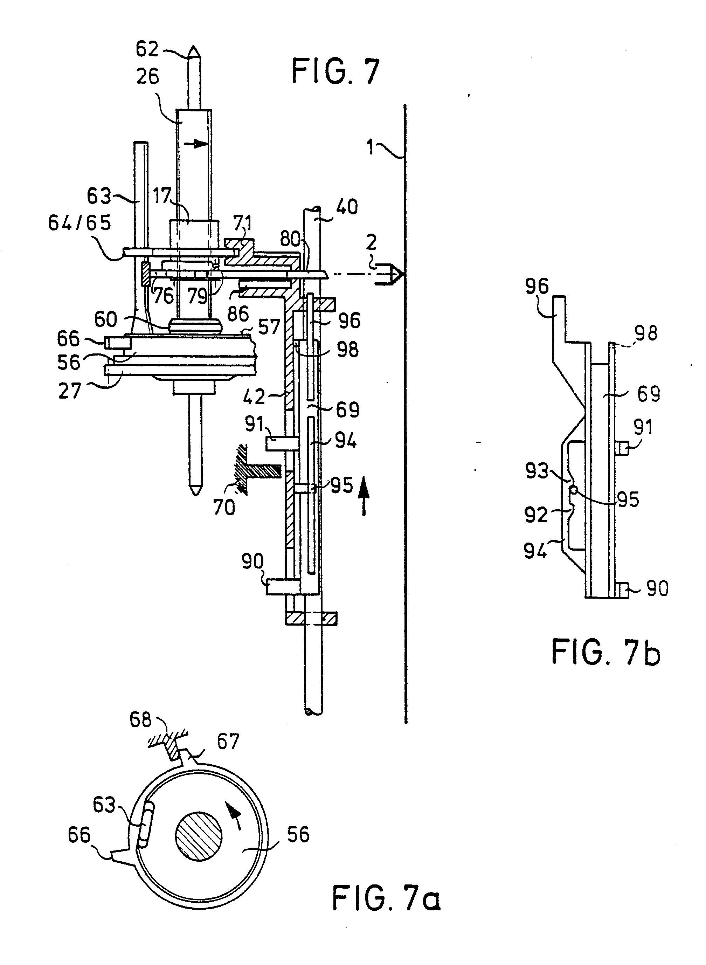

Bei der in den Fig. 7 gezeigten Funktionsstellung ist nun durch Umsteuern der Drehrichtung des antreibenden Schrittmotors 29 der zweite Führungszustand erreicht worden, d. h. daß nunmehr der Anschlag 67 des Mitnehmers 56 an dem ortsfesten Anschlag 68 anliegt., das Aufzeichnungsorgan 2 auf den Aufzeichnungsträger 1 abgesenkt ist und im weiteren Bewegungsablauf der Schlitten 42 in Pfeilrichtung « rückwärts » bewegt und dabei ein Strichelement auf dem Aufzeichnungsträger 1 erzeugt werden wird.

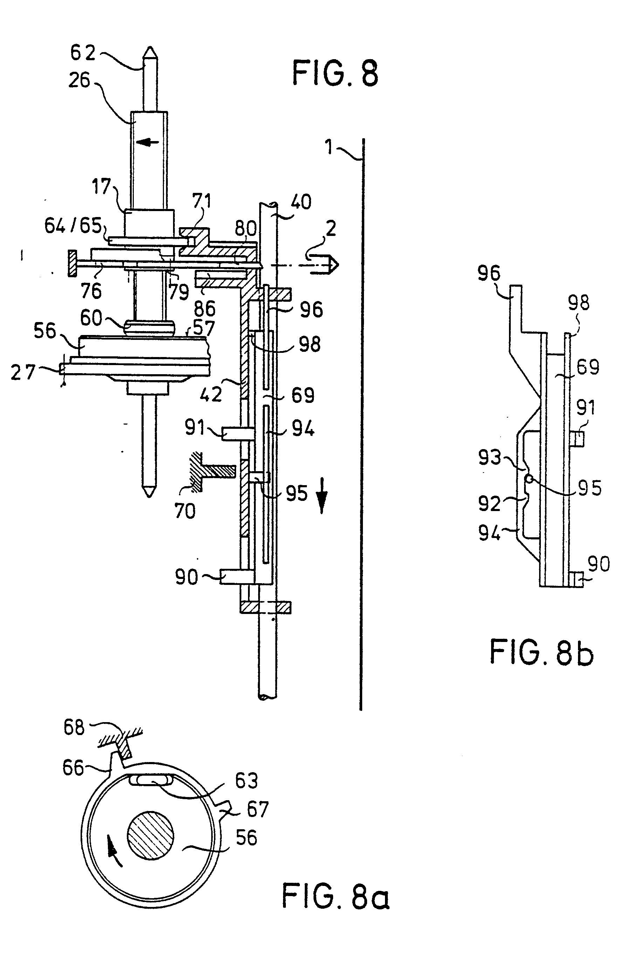

Nachdem die Drehrichtung des Schrittmotors 29 beim Erreichen der gewünschten Strichlänge umgesteuert worden ist, nimmt die Aufzeichnungsanordnung, wie die Fig. 8 zeigen, bereits wieder eine dem ersten Führungszustand entsprechende Funktionsstellung ein, d. h. der Anschlag 66 des Mitnehmers 56 liegt am ortsfesten Anschlag 68 an, das Aufzeichnungsorgan 2 ist vom Aufzeichnungsträger 1 angehoben und der Schlitten 42 wird im folgenden wieder in « Vorwärtsrichtung » bewegt. Während eines solchen, durch das vorgegebene Programm, in welchem die Schrittzahl des Schrittmotors für den jeweiligen Bewegungsabschnitt der Aufzeichnungsanordnung und die Befehle für die Drehrichtungsumkehr festgelegt sind, gesteuerten Aufzeichnungszyklus bleibt, wie die Fig. 7b und 8b zeigen, die Stellung des Sperrschlittens 69 in bezug auf den' Schlitten 42 unverändert. Dies ändert sich, wenn bei weiterer « Vorwärtsbewegung » des Schlittens 42 der Anschlagarm 91 des Sperrschlittens 69 an dem ortsfesten Anschlag 70 anschlägt, der Schlitten 42 jedoch in der gleichen Richtung weiterbewegt wird.

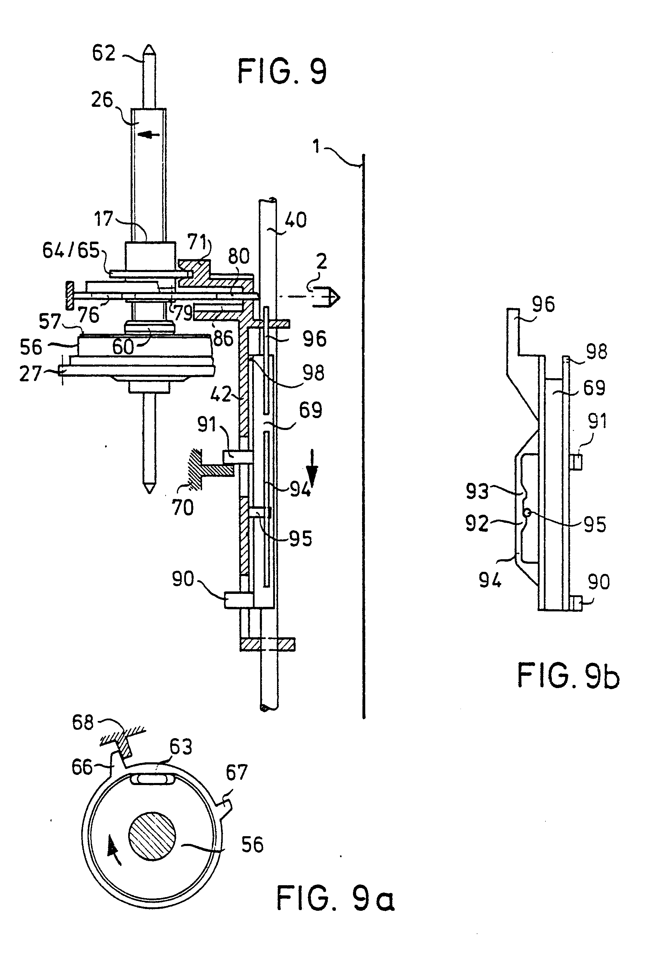

Eine entsprechende Funktionsstellung ist bei gleichbleibendem Führungszustand in den Fig. 9 dargestellt. Diese zeigen, daß sich der schlittenfeste Stift 95 von den am Sperrschlitten 69 ausgebildeten Nocken 93 entfernt und der am Sperrschlitten 69 angeformte Finger 96 gegen die Zunge 80 des Schiebers 76 vorgeschoben hat. Da das Aufzeichnen beim « Rückwärtsbewegen » der Aufzeichnungsanordnung erfolgt, ist in dieser Funktionsstellung immer noch ein Aufzeichnungszyklus steuerbar.

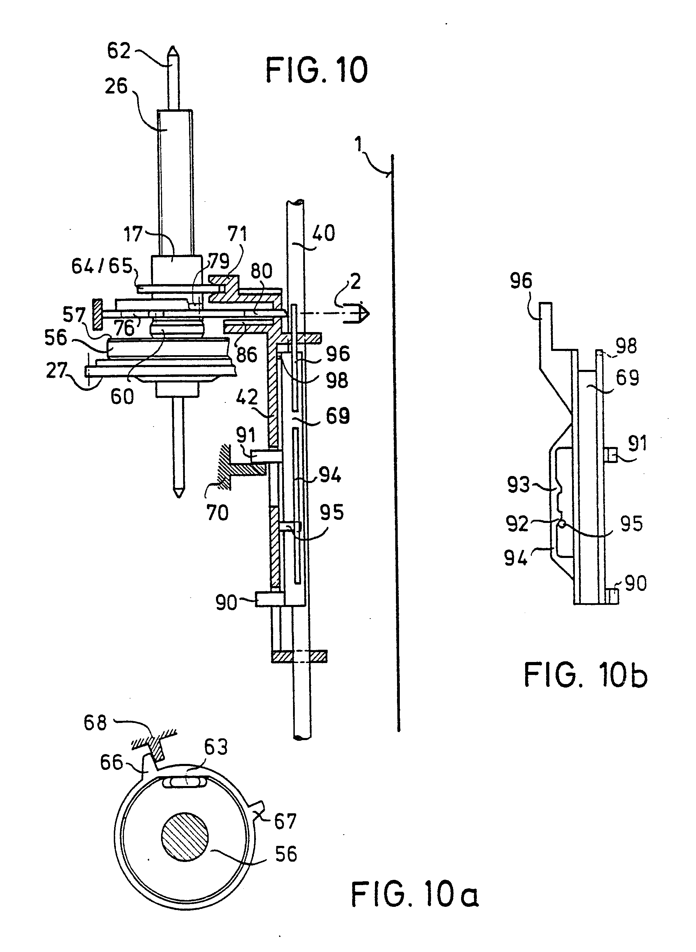

Bei weiterem « Vorwärtsbewegen » des Schlittens 42 wird dann aber bei gleichzeitigem Ausfedern des Bügels 94 und Überfahren des Nockens 92 durch den Stift 95 eine Funktionsstellung erreicht — Fig. 10 — in der der Finger 96 des Sperrschlittens 69 in die Bewegungsbahn der Zunge 80 eingreift. In dieser Funktionsstellung wird, wenn der Programmablauf und die Stellung der Aufzeichnungsanordnung übereinstimmen, die Drehrichtung des Schrittmotors 29 umgesteuert oder es wird, indem das Stellelement 17 gegen die Buchse 60 anläuft, der Schrittmotor 29 bei stillstehendem Getriebe aber weiterhin erregt wird bis er ein Drehrichtungs-Umkehrsignal erhält, diese Grenzstellung dazu benutzt, Programmablauf und Bewegungsablauf der Aufzeichnungsanordnung zu synchronisieren. Ein derartiges Ausrichten des Programmablaufs ist selbstverständlich auch mittels eines beispielsweise von einer Lichtschranke gegebenen Signals steuerbar, wobei die betreffende Lichtschranke vorzugsweise jeweils beim Absenken des Aufzeichnungsorgans betätigt wird.

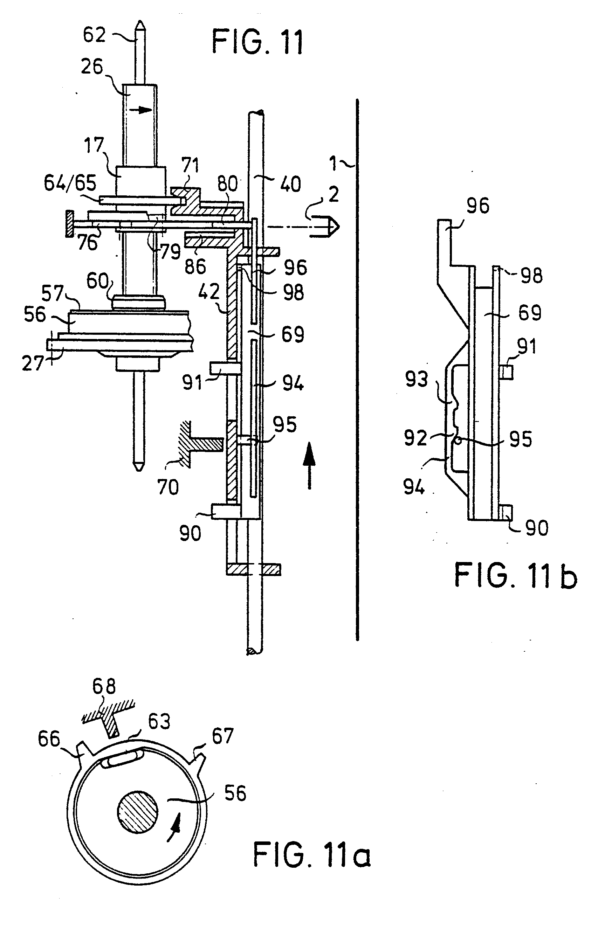

Die Fig. 11 zeigen die Aufzeichnungsanordnung in einer Funktionsstellung, bei der aus der vorstehend beschriebenen Funktionsstellung gemäß den Fig. 10 heraus eine Drehrichtungsumkehr erfolgte und eine « Rückwärtsbewegung » des Schlittens 42 eingeleitet worden ist. Bei dieser Drehrichtungsumkehr wird die Zunge 80 unter Einwirkung des vom Mitnehmer 56 ausgeübten Stellmoments auf den Finger 96 des Sperrschlittens 69 aufgesetzt und somit, was dem dritten Führungszustand entspricht, ein Absenken des Aufzeichnungsorgans 2 auf den Aufzeichnungsträger 1 verhindert. Um in diesem Führungszustand ein sicheres Mitschleppen des Sperrschlittens 69 durch den Schlitten 42 zu gewährleisten, d. h. die Friktion zwischen den beiden Schlitten 42 und 69 zu verstärken, kann, abgesehen davon, daß in diesem Sinne bereits der Stift 95 am Nocken 92 wirksam ist, dem keilförmig ausgebildeten Ende der Zunge 80 eine entsprechende, am Finger 96 ausgebildete schräge Fläche zugeordnet sein. An dieser Stelle sei noch nachgetragen, daß die Nocken 92 und 93 im ersten und zweiten Führungszustand dazu dienen zu verhindern, daß der Sperrschlitten 69 bei mangelnder Friktion mit dem Schlitten 42 oder bei Erschütterungen sich entweder in die Bewegungsbahn der Zunge 80 verschiebt oder dessen Finger 96 aus seiner Führung (Durchbruch 97) im Schlitten 42 herausgleitet.

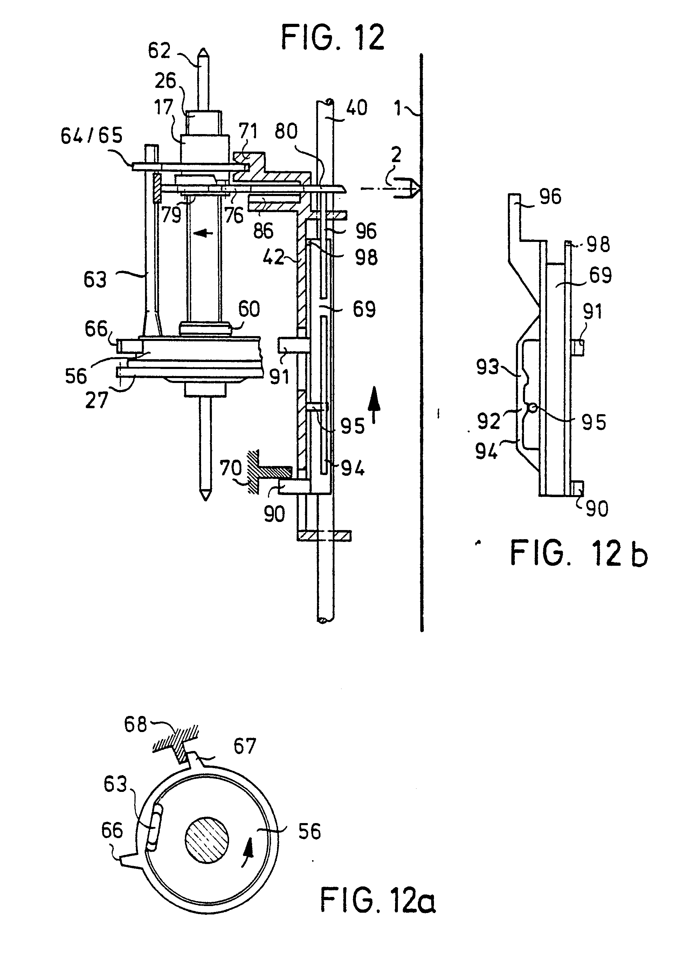

Gegen Ende der geschilderten « Rückwärtsbe-wegung » der Aufzeichnungsanordnung im drit-ten Führungszustand wird nun eine Funktionsstellung erreicht, bei der der Sperrschlitten 69, indem dessen Anschlagarm 90 mit dem ortsfesten Anschlag 70 in Wirkverbindung kommt, festgehalten wird. Ein Weiterbewegen des Schlittens 42 in « Rückwärtsrichtung » führt dann, wie die Fig. 12 zeigen, zu einer Funktionsstellung, bei der bei weiterhin gleichbleibendem Drehsinn des Schrittmotors 29 ein Abgleiten der Zunge 80 vom Finger 96 und somit ein Absenken des Aufzeichnungsorgans 2 auf den Aufzeichnungsträger 1, also ein Übergang in den zweiten Führungszustand erfolgt.

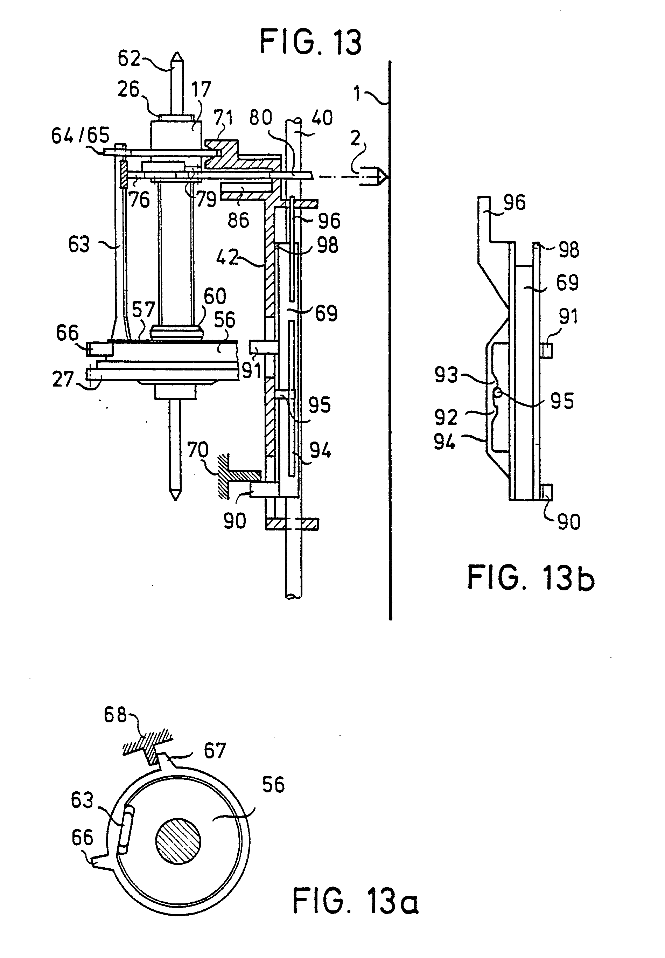

Wird nun, vorausgesetzt daß zwischen Schlitten 42 und Sperrschlitten 69 ein entsprechender Freilauf gegeben ist, die Drehrichtung des Schrittmotors 29 beibehalten, so läßt sich, ausgehend von der letztgenannten Funktionsstellung, unmittelbar nach der Bewegungsphase, in der das Aufzeichnen verhindert war, die Aufzeichnung eines Strichelementes vornehmen. Die Funktionsstellung am Ende dieser Aufzeichnung zeigen die Fig. 13.

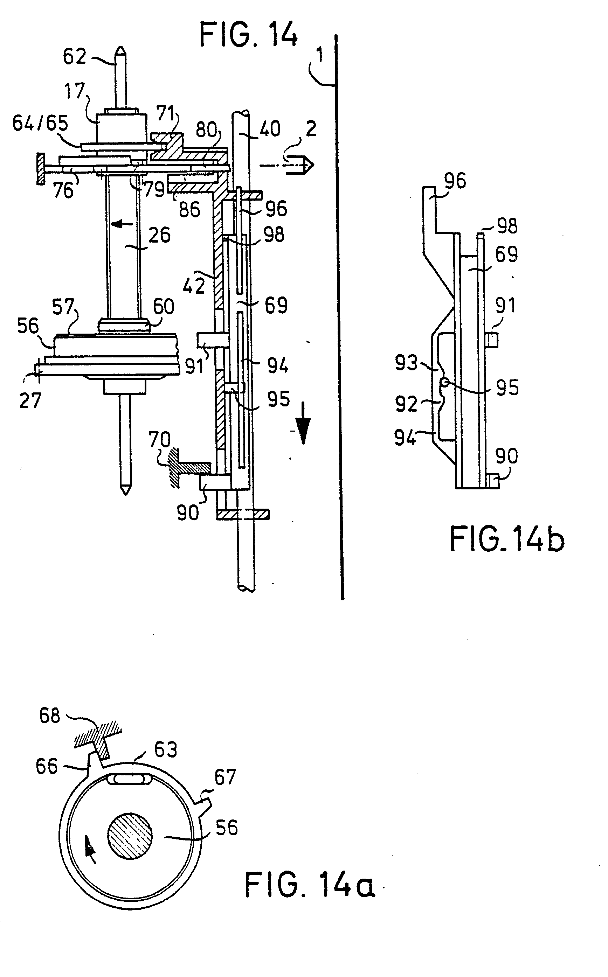

Wenn nun in dieser mit den Fig. 13 wiedergege-benen Funktionsstellung die Drehrichtung des antreibenden Schrittmotors 29 programmgemäß umgesteuert wird, so wird die in den Fig. 14 dargestellte, wiederum dem ersten Führungszustand entsprechende Funktionsstellung erreicht, bei welcher das Aufzeichnungsorgan 2 vom Aufzeichnungsträger 1 angehoben ist, der Anschlag 66 des Mitnehmers 56 am ortsfesten Anschlag 68 anliegt und nachfolgend eine « Vorwärtsbewegung » der Aufzeichnungsanordnung in der bereits bei den Fig. 6 beschriebenen Weise erfolgt.

### Patentansprüche

1. Verfahren zum Steuern eines Aufzeichnungsorgans (2), welches um auf einem Aufzeichnungsträger (1) Aufzeichnungen in mehreren voneinander unabhängigen Spuren zu erzielen, quer zu einer Relativbewegung zwischen sich und dem Aufzeichnungsträger (1) hin und her bewegt wird und jeweils auf den Aufzeichnungsträger (1) abgesenkt und nach erfolgtem Aufzeichnen von dem Aufzeichnungsträger (1) angehoben wird, mit ei-nem Antriebsmotor (29), dadurch gekennzeich-net, daß ausgehend von einem ersten Führungszustand des Aufzeichnungorgans (2), welcher bei einer bestimmten Drehrichtung des Antriebsmotors (29) gegeben ist und bei welchem an dem Aufzeichnungsorgan (2) ein Stellmoment im Sinne von Anheben des Aufzeichnungsorgans (2) vom Aufzeichnungsträger (1) wirksam ist und das Aufzeichnungsorgan (2) nicht registrierend quer zum Aufzeichnungsträger (1) « vorwärts » bewegt wird, bei Umkehr der Drehrichtung des Antriebsmotors (29) an dem Aufzeichnungsorgan (2) ein Stellmoment im Sinne von Absenken des Auf-zeichnungsorgans (2) auf den Aufzeichnungsträ-ger (1) wirksam ist und ein zweiter Führungszustand des Aufzeichnungsorgans (2) erreicht wird, bei welchem das Aufzeichnungsorgan (2) registrierend quer zum Aufzeichnungsträger (1) « rückwärts » bewegt wird und aus welchem bei erneuter Umkehr der Drehrichtung des Antriebsmotors (29) eine Rückführung in den ersten Führungszustand erfolgt, daß bei einer bestimmten Grenzstellung des Aufzeichnungsorgans (2) in dem ersten Führungszustand ein Verriegelungsmittel (6 oder 96) wirksam wird, derart daß bei Umkehr der Drehrichtung des Antriebsmotors (29) ein dritter Führungszustand eintritt, bei welchem das Aufzeichnungsorgan (2) nicht registrierend quer zum Aufzeichnungsträger (1) « rückwärts » bewegt wird und daß in einer bestimmten Grenzstellung des Aufzeichnungsorgans (2) im dritten Führungszustand das Verriegelungsmittel (6 oder 96) unwirksam wird und das Aufzeichnungsorgan (2) unter der Wirkung des an ihm beim Rückwärtsbewegen im Sinne von Absenken auf den Aufzeichnungsträger (1) wirksamen Stellmoments in den zweiten Führungszustand übertritt, aus welchem bei erneuter Umkehr der Drehrichtung des Antriebsmotors (29) wiederum ein Rückführen in den ersten Führungszustand erfolgt.

2. Aufzeichnungsanordnung zur Durchführung des Verfahrens nach Anspruch 1, mit einem Aufzeichnungsorgan (2), dem ein sowohl parallel zu einer Aufzeichnungsebene verschiebbar, als auch um eine Verschiebeachse schwenkbar angeordnetes Stellelement (17) zugeordnet ist, ei-nem Aufzeichnungsträger (1), einem Antriebsmo-tor (29) und einem Schlitten (42), dadurch gekennzeichnet, daß das Stellelement (17) über eine Rutschkupplung mit dem in einer Antriebsverbindung zwischen dem Antriebsmotor (29) und dem Aufzeichnungsorgan (2) befindlichen Getriebeelement gekoppelt ist und daß zur Bildung von Führungszuständer, von denen zwei eine Bewegung des Aufzeichnungsorgans (2) quer zum Aufzeichnungsträger (1) einerseits in angehobenem, andererseits in auf den Aufzeichnungsträger (1) abgesenkten Zustand gestatten, während in einem dritten Führungszustand ein Absenken des Aufzeichnungsorgans (2) auf den Aufzeichnungsträger (1) verhindert ist, Anschlag- und Verriegelungsmittel (14, 15, 16, 8, 9 oder 66, 67, 68, 69, 96) vorgesehen sind.

3. Anordnung nach Anspruch 2, dadurch gekennzeichnet, daß das Stellelement (17) mittels eines Schraubgetriebes antreibbar ist, indem ein im Stellelement (17) ausgebildetes Innengewinde mit einer vom Antriebsmotor (29) getriebenen Gewindespindel (26) in Eingriff steht, daß Mittel (32, 33, 34) vorgesehen sind, die ein Einstellen einer zwischen der Gewindespindel (26) und dem Stellelement (17) wirksamen, die Schwenkbewegungen des Stellelementes (17) ermöglichenden Friktion gestatten und daß ein erster, als Mitnehmer ausgebildeter Arm (38) des Stellelementes (17), an dem auf dem quer zum Aufzeichnungsträger (1) verschiebbar angeordneten Schlitten (42), senkrecht zum Aufzeichnungsträger (1) bewegbar und gefedert gelagerten Aufzeichnungsorgan (2) angreift, während einem zweiten Arm (3) des Stellelementes (17) mehrere, parallel zur Achse des Stellelementes (17) angeordnete, die Schwenkbewegung des Stellelementes (17) begrenzende und als Führungsbahnen (4, 5, 6, 7) wirkende Anschläge (14, 15, 16) zugeordnet sind, wobei jeweils am Ende zweier einander abgewandter Führungsbahnen (5, 6) ein durch den Arm (3) des Stellelementes (17) betätigbares, lediglich ein Verlassen der jeweiligen Führungsbahn gestattendes, gefedert gelagertes Sperrglied (8, 9) vorgesehen ist.

4. Anordnung nach Anspruch 2, dadurch gekennzeichnet, daß das Stellelement (17) über eine an ihm ausgebildete Verzahnung (79) mit einer dem Aufzeichnungsorgan (2) zugeordneten Zahnstange (76/78) in Eingriff steht und die Mitnahme des Schlittens (42) quer zum Aufzeichnungsträger (2) mittels einer zwischen dem Schlitten (42) und dem Stellorgan (17) vorgesehenen Stift- oder Bund-Nut-Verbindung (64, 71) erfolgt.

5. Anordnung nach Anspruch 2, dadurch gekennzeichnet, daß das auf einer parallel zur Führung des das Aufzeichnungsorgan (2) tragenden Schlittens (42) angeordneten Achse verschieb- und schwenkbar gelagerte Stellelement (17) quer zum Aufzeichnungsträger (1) über den getrieblich mit dem Antriebsmotor (29) in Wirkverbindung stehenden Schlitten (42) mitführbar ist und daß zur Bildung eines das Aufzeichnungsorgan (2) senkrecht zum Aufzeichnungsträger (1) bewegenden Stellmomentes dem Stellelement (17) ein konzentrisch zu dessen Achse gelagerter, vorgzusweise scheibenförmiger Mitnehmer (56) zugeordnet ist, welcher in friktioneller Verbindung mit einem im Getriebezweig zwischen dem Schlitten (42) und dem Antriebsmotor (29) befindlichen, ebenfalls konzentrisch zur Achse des Stellelementes (17) gelagerten Getriebeelementes (27) steht und an welchem parallel zur Achse des Stellelementes (17) ein mit dem Stellelement (17) in Eingriff stehender Führungssteg (63) ausgebildet ist.

6. Anordnung nach Anspruch 2, dadurch gekennzeichnet, daß das Aufzeichnungsorgan (2) unmittelbar mit den Stellelement (17) verbunden ist.

7. Anordnung nach Anspruch 2, dadurch gekennzeichnet, daß das Stellelement (17) mittels eines Schraubgetriebes antreibbar ist, daß auf der Gewindespindel (26) des Schraubgetriebes ein scheibenförmiger Mitnehmer (56) drehbar gelagert und einerseits über eine Friktionsverbindung mit einem mit der Gewindespindel (26) drehfest verbundenen Zahnrad (27) gekoppelt ist, andererseits mittels eines an ihm ausgebildeten Führungssteges (63) in eine an dem Stellelement (17) ausgebildete Gabel (65) eingreift, daß die Mitnahme des auf Führungsstangen (40, 41) gelagerten, das Aufzeichnungsorgan (2) tragenden Schlittens (42) mittels einer zwischen Stellelement (17) und Schlitten (42) vorgesehenen Bund-Nut-Verbindung (64, 71) erfolgt und für die Übertragung der Stellbewegung des Aufzeichnungsorgans (2) am Stellelement (17) eine Verzähnung (79) ausgebildet ist, mit der eine dem Aufzeichnungsorgan (2) zugeordnete Zahnstange (76, 78) in Eingriff steht und daß zur Verwirklichung der beiden ersten Führungszustände dem Mitnehmer (56) Anschläge (66, 67) zugeordnet sind, während zur Verwirklichung des dritten Führungszustandes ein parallel mit dem Schlitten (42) geführter und mit einem ortsfesten Anschlag (70) zusammenwirkender Sperrschlitten (69) vorgesehen ist und zwischen Schlitten (42) und Sperrschlitten (69) registrierpositionsabhängig wirksame Mitnahmemittel (92, 93, 95, 98) ausgebildet sind.

8. Anordnung nach Anspruch 7, dadurch gekennzeichnet, daß für das Abzweigen der Stellbewegung des Aufzeichnungsorgans (2) senkrecht zum Aufzeichnungsträger (1) ein jeweils bei jeder Drehrichtungsumkehr des Antriebsmotors (29) in und außer Eingriff mit dem zwischen dem Antriebsmotor (29) und dem das Aufzeichnungsorgan (2) tragenden Schlittens (42) befindlichen Getriebezweig kuppelndes Zahnsegment vorgesehen ist.

9. Anordnung nach Anspruch 2, dadurch gekennzeichnet, daß als Antriebsmotor (29) ein Schrittmotor Anwendung findet, daß ein Mikroprozessorsystem vorgesehen ist, das die Drehrichtungsänderungen des Schrittmotors gemäß einem gespeicherten Programm steuert und daß die Normierung des Programmablaufs wenigstens durch ein beim Absenken des Aufzeichnungsorgans (2) auf den Aufzeichnungsträger (1) erzeugtes Signal erfolgt.

**Claims**

1. Method for controlling a recording means (2) which in order to produce on a record carrier (1) recordings in several independent channels is moved back and forth transverse to the relative movement between itself and the record carrier (1) and which is moved down to the record carrier (1) and lifted off after the recording has been effected with one driving motor (29), characterized in that starting from a first guiding condition of the recording means (2) which is given by a certain driving direction of the driving motor (29) and in which at the recording means (2) there is effective a setting torque in the sense of lifting the recording means (2) off the record carrier (1) and in which the recording means (2) is moved « forward » transverse to the record carrier (1) in non recording state, in that upon reversing the driving direction of the driving motor (29) there is a setting torque at the recording means (2) in the sense of moving downward the recording means (2) to the record carrier (1) so that there is achieved a second guiding condition of the recording means (2) which is moved « backward » transverse to the record carrier and from which upon again reversing the driving direction of the driving motor (29) a return to the first guiding condition is achieved, that in a certain limiting position of the recording means (2) in the first guiding condition a locking means (6 or 96) becomes effective so that when the driving direction of the driving motor (29) is reversed a third guiding condition is achieved in which the recording means (2) is moved in non-recording state transverse to the record carrier (1) in « backward » direction and that in a certain limiting position of the recording means (2) in the third guiding condition the locking means (6 or 96) is ineffective and that the recording means (2) under the effect of the setting torque effective during the backward motion in the sense of moving it down to the record carrier (1) goes into the second guiding condition from which upon a new reversal of the driving direction of the driving motor (29) there is a return to the first guiding condition.

2. Recording arrangement for executing the method according to Claim 1 with a recording means (2) to which is attributed a setting element (17) which is translatable parallel with respect to a recording plane a well as pivotal to the axis of translation, a record carrier (1), a driving motor (29) and a slide (42) characterized in that the setting element (17) is coupled via a friction clutch to the drive element being in driving connection between the drive motor (29) and the recording means (2) and in that for the formation of guiding conditions of which two allow for a movement of the recording means transverse to the record carrier on the one hand in lifted off state and on the other hand in a condition moved down to the record carrier (1) whilst in a third guiding condition the downward movement of the recording means to the record carrier (1) is prevented, there are stop and locking means (14, 15, 16, 8, 9 or 66, 67, 68, 96).

3. Arrangement according to Claim 2, characterized in that the setting element (17) may be driven by means of a screw drive in that at the setting element (17) there is provided an internal winding which is in operative connection with a threaded spindle (26) driven by the drive motor (29), in that means (32, 33, 34) are provided which allow for setting the friction between the threaded spindle (26) and the setting element (17) effecting the pivotal movement of the setting element (17) and in that a first arm (38) in the form of a catch of the setting element (17) engages the recording means (2) being mounted movable and vertically elastically to the record carrier (1) and translatable in a slide (42) to be moved transverse to the record carrier (1), whilst attributed to a second arm (3) of the setting element (17) there are several stops (14, 15, 16) arranged parallelly to the axis of the setting element (17) and limiting the pivotal movement of the setting element (17) and serving as guide channels (4, 5, 6 and 7), locking elements (8, 9) being provided at the end of each two guide channels (5, 6) being opposite to each other and being operated by the arm (3) of the setting element (17), which locking elements (8, 9) are elastically mounted and only allow the arm (3) to leave its guide channel.

4. Arrangement according to Claim 2, characterized in that the setting element (17) by means of a toothing (79) connected therewith is in engagement with a toothed bar (76/78) attributed to the recording means (2) and in that the driving connection to the slide (42) transverse to the record carrier (2) is effected by means of a pin and slot or collar and slot connection (64, 71) between the slide (42) and the setting element (17).

5. Arrangement according to Claim 2, characterized in that the setting element (17) which is translatable and pivotal on an axis running parallel to the slide (42) serving to mount and guide the recording means (2) is moved transverse to the record carrier (1) by means of the slide (42) which is driven by the driving motor (29) and in that for producing a setting torque for moving the recording means (2) vertical to the record carrier (1) a preferably disk-shaped catch (56) arranged concentrically to its axis is attributed to the setting element (17) which catch is in frictional connection with a gear branch between the slide (42), driving motor (29) and a driving element (27) which is also concentrical to the axis of the setting element (17) and at which parallel to the axis of the setting element (17) and at which parallel to the axis of the setting element (17) there is a guide link (63) which is in operative engagement with the setting element (17).

6. Arrangement according to Claim 2, characterized in that recording means (2) is directly connected to the setting element (17).

7. Arrangement according to Claim 2, characterized in that the setting element (17) may be driven by a screw drive, in that on the threaded spindle (26) of the screw drive there is rotatably mounted a disk-shaped catch (56) which is on the one hand coupled via a frictional connection to the toothed wheel (27) firmly connected to the threaded spindle (26) and which on the other hand by means of a guide link (63) formed thereon engages into a fork-shaped part (65) at the setting element (17) and in that the driving connection to the slide (42) carrying the recording means (2) and mounted on guide bars (40, 41) is effected by means of a collar and slot connection (64, 71) between the setting element (17) and the slide (42) a toothing (79) being formed on the setting element (17) for transmitting the setting movement to the recording means (2) which toothing is in engagement with a toothed bar (76, 78) at the recording means (2) and in that for realizing the two first guiding conditions stops (66, 67) are attributed to the disk-shaped catch (56) while for realizing the third guiding condition a locking slide (69) is provided arranged parallelly to the slide (42) and cooperating with a fixed stop (70) driving means (92, 93, 94, 98) being provided in dependence on the recording position between the slide (42) and the locking slide (69).

8. Arrangement according to Claim 7, characterized in that for branching off the setting movement of the recording means (2) vertical to the record carrier (1) a toothed segment is provided coupled to the gearing branch between the driving motor (29) and the slide (42) carrying the recording means (2) which is brought into and out of engagement upon each reversal of the driving motion of the driving motor (29).

9. Arrangement according to Claim 2, characterized in that as a driving motor (29) a step motor is used in that a microprocessor system is provided which controls the reversals of the driving motion of the step motor in accordance with a controlling program and in that the sequence of the program steps is reset at least by a signal given upon setting down the recording means (2) to the record carrier (1).

**Revendications**

1. Procédé pour la commande d'un organe enregistreur (2) lequel, pour obtenir des enregistrements en plusieurs pistes indépendantes les unes des autres, est animé d'un mouvement de va et vient, transversalement à un mouvement relatif entre lui-même et le support d'enregistrement (1), et est respectivement abaissé sur le support d'enregistrement (1) et décollé dudit support d'enregistrement (1) après l'achèvement de l'enregistrement, avec un moteur d'entraînement (29), caractérisé par le fait que, en partant d'un premier état de guidage de l'organe enregistreur (2) qui est donné pour un sens de rotation déterminé du moteur d'entraînement (29) et dans lequel un couple de commande agit sur l'organe enregistreur (2) dans le sens du décollage dudit organe enregistreur (2) du support d'enregistrement (1) et où l'organe enregistreur (2) est déplacé, sans enregistrer, transversalement par rapport au support d'enregistrement (1), « en avant », alors qu'en cas d'inversion du sens de rotation du moteur d'entraînement (29), un couple de commande agit sur l'organe enregistreur (2) dans le sens de l'abaissement de cet organe enregistreur (2) sur le support d'enregistrement (1) et où un deuxième état de guidage de l'organe enregistreur (2) est atteint dans lequel ledit organe enregistreur (2) est déplacé, en enregistrant, transversalement par rapport au support d'enregistrement (1), « en arrière » et à partir duquel, en cas d'inversion renouvelée du sens de rotation du moteur d'entraînement (29), l'organe enregistreur (2) est ramené au premier état de guidage, que pour une position limite déterminée de l'organe enregistreur (2) dans le premier état de guidage, un moyen de verrouillage (6 ou 96) devient efficace, de telle sorte qu'en cas d'inversion du sens de rotation du moteur d'entraînement (29), un troisième état de guidage s'établit pour lequel l'organe enregistreur (2) est déplacé, sans enregistrer, transversalement par rapport au support d'enregistrement (1), « en arrière », et que dans une position limite déterminée de l'organe enregistreur (2) dans le troisième état de guidage, le moyen de verrouillage (6 ou 96) devient inefficace et que l'organe enregistreur (2), sous l'action du couple de commande agissant sur lui lors du mouvement en arrière, dans le sens de l'abaissement sur le support d'enregistrement (1), passe au deuxième état de guidage à partir duquel, en cas d'inversion renouvelée du sens de rotation du moteur d'entraînement (29), ledit organe enregistreur (2) est à nouveau ramené au premier état de guidage.

2. Dispositif d'enregistrement pour l'exécution du procédé selon la revendication 1, avec un organe enregistreur (2) auquel est associé un élément de réglage (17) monté de façon à pouvoir aussi bien être déplacé parallèlement à un plan d'enregistrement qu'à pouvoir pivoter autour d'un axe de déplacement, avec un support d'enregistrement (1), un moteur d'entraînement (29) et un chariot (42), caractérisé par le fait que l'élément de réglage (17) est accouplé, par l'intermédiaire d'un accouplement à friction, avec l'élément d'engrenage situé dans une transmission entre le moteur d'entraînement (29) et l'organe enregistreur (2) et que, pour la formation d'états de guidage, dont deux permettent un mouvement de l'organe enregistreur (2) transversalement par rapport au support d'enregistrement (1) d'une part dans l'état soulevé, d'autre part dans l'état abaissé sur le support d'enregistrement (1) alors que dans un troisième état de guidage, un abaissement de l'organe enregistreur (2) sur le support d'enregistrement (1) est empêché, sont prévus des moyens de butée et de verrouillage (14, 15, 16, 8, 9 ou 66, 67, 68, 69, 96).

3. Dispositif selon la revendication 2, caractérisé par le fait que l'élément de réglage (17) peut être entraîné au moyen d'un engrenage hélicoïdal du fait qu'un filet intérieur pratiqué dans l'élément de réglage (17) engrène avec une broche filetée (26) entraînée par le moteur d'entraînement (29), que des moyens (32, 33, 34) sont prévus qui permettent un réglage d'une friction efficace entre la broche filetée (26) et l'élément de réglage (17) permettant les mouvements pivotants de l'élément de réglage (17) et qu'un premier bras (38) réalisé comme taquet d'entraînement de l'élément de réglage (17) agit sur l'organe enregistreur (2) monté sur ressort et déplaçable perpendiculairement au support d'enregistrement (1), sur le chariot (2) disposé de façon à pouvoir être déplacé transversalement audit support d'enregistrement (1) alors qu'à un deuxième bras (3) de l'élément de réglage (17), sont associées plusieurs butées (14, 15, 16) disposées parallèlement à l'axe de l'élément de réglage (17), limitant les mouvements pivotants dudit élément de réglage (17) et agissant comme pistes de guidage (4, 5, 6, 7), un organe de blocage (8, 9) monté sur ressort, pouvant être actionné par le bras (3) de l'élément de réglage (17), permettant seulement l'abandon de la piste de guidage respective, étant toujours prévu à l'extrémité de deux pistes de guidage (5, 6) se tournant le dos.

4. Dispositif selon la revendication 2, caractérisé par le fait que l'élément de réglage (17) engrène, par l'intermédiaire d'une denture (79) avec une crémaillère (76/78) associée à l'organe enregistreur (2) et que l'entraînement du chariot (42) transversalement au support d'enregistrement (1) se fait au moyen d'un assemblage par tenon ou collet et mortaise (64, 71) prévu entre le chariot (42) et l'élément de réglage (17).

5. Dispositif selon la revendication 2, caractérisé par le fait que l'élément de réglage (17) monté de façon à pouvoir être déplacé et pivoté parallèlement au guidage du chariot (42) portant l'organe enregistreur (2) peut être amené transversalement au support d'enregistrement (1) par l'intermédiaire du chariot (42) coopérant fonctionnellement avec le moteur d'entraînement (29) et que, pour la formation d'un couple de commande déplaçant l'organe enregistreur (2) perpendiculairement au support d'enregistrement (1), à l'élément de réglage (17) est associé un taquet d'entraînement (56) de préférence discoïde monté de façon concentrique par rapport à l'axe de ce dernier qui coopère par friction avec un organe d'engrenage (27) également monté de façon concentrique par rapport à l'axe de l'élément de réglage (17), disposé dans une branche d'engrenage entre le chariot (42) et le moteur d'entraînement (29), et sur lequel est formée parallèlement à l'axe de l'élément de réglage (17) une traverse de guidage (63) engrenant avec l'élément de réglage (17).

6. Dispositif selon la revendication 2, caractérisé par le fait que l'organe enregistreur (2) est directement relié à l'élément de réglage (17).

7. Dispositif selon la revendication 2, caractérisé par le fait que l'élément de réglage (17) peut être entraîné au moyen d'un engrenage hélicoïdal, que sur la broche filetée (26) de l'engrenage hélicoïdal est monté à rotation un taquet d'entraînement discoïde (56) et accouplé, d'une part, par l'intermédiaire d'une liaison à friction, avec une roue dentée (27) calée sur la broche filetée (26) et s'engage, d'autre part, au moyen d'une traverse de guidage (63) formée sur lui, dans une fourche (65) formée sur l'élément de réglage (17), que le transport du chariot (42) monté sur des barres de guidage (40, 41) et portant l'organe enregistreur (2) se fait au moyen d'un assemblage collet-rainure (64, 71) prévu entre l'élément de réglage (17) et le chariot (42) et que pour le transfert du mouvement de réglage de l'organe enregistreur (2), une denture (79) est pratiquée sur l'élément de réglage (17) avec laquelle engrène une crémaillère (76, 78) associée à l'organe enregistreur (2) et que, pour la réalisation des deux premiers états de guidage, des butées (66, 67) sont associées au taquet d'entraînement (56) alors que, pour la réalisation du troisième état de guidage, il est prévu un chariot de blocage (69) guidé parallèlement au chariot (42) et coopérant avec une butée stationnaire (70) et qu'entre le chariot (42) et le chariot de blocage (69) sont formés des moyens d'entraînement (92, 93, 95, 98) agissant en fonction de la position d'enregistrement.

8. Dispositif selon la revendication 7, caractérisé par le fait que pour la dérivation du mouvement de réglage de l'organe enregistreur (2) perpendiculairement au support d'enregistrement (1) est prévu un segment denté entrant, à chaque inversion du sens de rotation du moteur d'entraînement (29), en et hors engagement avec la branche d'engrenage située entre le moteur d'entraînement et le chariot (42) portant l'organe enregistreur (2).

9. Dispositif selon la revendication 2, caractérisé par le fait que le moteur d'entraînement (29) utilisé est un moteur pas à pas, qu'il est prévu un système à microprocesseur qui commande les changements de sens de rotation du moteur pas à pas conformément à un programme mémorisé et que la standardisation du cycle de programme a lieu au moins par un signal engendré lors de l'abaissement de l'organe enregistreur (2) sur le support d'enregistrement (1).

**FIG.1**

FIG. 2

FIG. 3

FIG. 4

FIG. 5

4

FIG.6

FIG.6b

FIG.6a

FIG. 7

FIG. 7b

FIG. 7a

FIG. 8

FIG. 8b

FIG. 8a

FIG. 9

FIG. 9b

FIG. 9a

FIG. 10

FIG. 10b

FIG. 10a

FIG. 11

FIG. 11 b

FIG. 11a

# FIG. 12

# FIG. 12 b

# FIG. 12a

FIG. 13

FIG. 13b

FIG. 13a

FIG. 14

FIG. 14b

FIG. 14a